# EUROPEAN PATENT SPECIFICATION

(11) **EP 1 435 494 B1**
(45) Date of publication and mention of the grant of the patent: **20.02.2008**
(21) Application number: 03027465.8
(22) Date of filing: 01.12.2003
(51) Int. Cl.: F25B 41/04, F25B 39/02

(54) **Refrigeration system and method for operating a refrigeration system**
Klimaanlage und Verfahren zum Betreiben der Anlage
Système de réfrigération et procédé pour faire fonctionner le système

(30) Priority: 02.12.2002 JP 2002350151
(43) Date of publication of application: 07.07.2004
(73) Proprietor: TGK COMPANY, LTD., Tokyo 193-0942 (JP)
(72) Inventor: Hirota, Hisatoshi, Hachioji-shi Tokyo 193-0942 (JP)
(74) Representative: Grünecker, Kinkeldey, Stockmair & Schwanhäusser Anwaltssozietät

(56) References cited:
- US-A- 5 996 369
- US-A1- 2002 011 073
- US-B1- 6 244 059

## Description

The invention relates to a refrigeration system and a method of operating a refrigeration system, particularly for use in an automotive air conditioner which uses a refrigerant gas harmful to the human body.

A known refrigeration system of an automotive air conditioner (JP-2002-147898 A) comprises a compressor, a condenser, a receiver, an expansion valve, and an evaporator.

In automotive air conditioners, chlorofluorocarbon substitute gas has been used as refrigerant. In consideration of global warming refrigerants having less Global Warming potential have been proposed, like e.g. carbon dioxide, propane, etc. If such refrigerants leak out in case of damage to the evaporator or the piping in the vehicle compartment the occupants can possibly be put in a grave situation such as suffocation due to deficiency of oxygen or outbreak of fire.

It is an object of the invention to provide a refrigeration system and a method for operating a refrigeration system, which allow to prevent, while the automotive air conditioner is not in use, that refrigerant leaks out into the vehicle compartment when the evaporator or any piping in the vehicle compartment is damaged.

The above problem is solved by the features of claims 1 and 3.

When the operation of this refrigeration system is to be stopped, the inlet side of the evaporator first is closed by the solenoid valve. This suppresses any further inflow of refrigerant from the expansion valve. At the same time the compressor is controlled to continue to operate for a predetermined time, in order to suck the refrigerant out of the evaporator. When the compressor finally is stopped the refrigerant already will be collected or removed from the evaporator. The check valve then prevents that collected refrigerant will flow back into the evaporator. During stoppage of the refrigeration system almost no refrigerant will remain in the evaporator. Even if the evaporator or piping is damaged, no refrigerant can leak out into the vehicle compartment. This results in increased safety at least for passengers in the automobile.

The core of the invention is an equipment of the automobile air conditioner, and of the automobile itself, which allows to empty the evaporator and even associated pipings in the passenger compartment to a substantive extent from harmful liquid and/or gaseous refrigerant when the air conditioner is switched off and to keep the empty condition as long as the air conditioner is not used. Refrigerant is removed from the evaporator, according to the method of the invention, by the continued operation of the sucking compressor while any further supply of refrigerant to the evaporator is blocked, or by the temporary operation of a liquid pump. The refrigerant is removed through a check valve which blocks any backflow of refrigerant. The engine driven compressor removes remaining refrigerant from the evaporator even if the ignition is turned off (after run routine for the engine). Also the pump may continue to operate with the help of a current monitored after run routine. The program routines may be executed e.g. by the engine management computer or the automobile control computer.

Embodiments of the invention will be described with reference to the drawings.
- Fig. 1: is a system diagram illustrating a first embodiment of a refrigeration system e.g. of an automotive air condition according to a first embodiment;
- Fig. 2: a system diagram of a second embodiment;
- Fig. 3: a system diagram of a third embodiment;
- Fig. 4: a system diagram of a fourth embodiment; and
- Fig. 5: a section of an integrated valve.

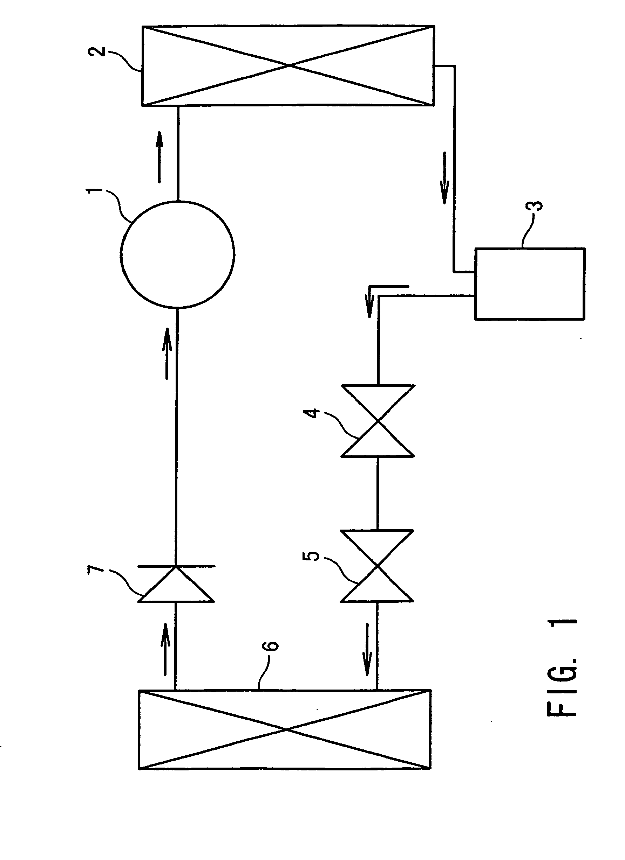

The refrigeration system in Fig. 1 comprises a compressor 1 for compressing a circulating refrigerant, a condenser 2 for condensing the compressed refrigerant, a receiver 3 for storing refrigerant and also for separating condensed refrigerant into gas and liquid, an expansion valve 4 for adiabatically expanding the liquid refrigerant, a solenoid valve 5 for blocking a flow passage when and as long as the operation of the automotive air conditioner is to be stopped, an evaporator 6 arranged in a vehicle compartment for evaporating the refrigerant expanded by the expansion valve 4, and a check valve 7 for preventing the refrigerant from flowing from the compressor 1 back into the evaporator 6. Compared with conventional systems, this refrigeration system is additionally provided with the solenoid valve 5 and the check valve 7.

As long as the automotive air conditioner is operated, the solenoid valve 5 is kept fully open. The refrigeration system operates conventionally without including the solenoid valve 5 and the check valve 7 into the refrigeration cycle. Accordingly, the liquid refrigerant separated in the receiver 3 is adiabatically expanded by the expansion valve 4 and then enters the evaporator 6 through the open solenoid valve 5. The refrigerant evaporated in the evaporator 6 then passes through the open check valve 7 and returns to the compressor 1.

When the operation of the automotive air conditioner is to be stopped, first, the solenoid valve 5 is closed to shut off the refrigerant passage between the expansion valve 4 and the evaporator 6. Thus, the refrigerant delivered under pressure from the compressor 1 is prevented from entering the evaporator 6. The compressor 1 is kept operating for a predetermined time after the solenoid valve 5 is closed. This causes a pressure drop in suction chambers of the compressor 1, so that the refrigerant in the evaporator 6 can be sucked out at least to some degree. When the evaporator 6 becomes empty, the compressor 1 is stopped. Then the refrigerant on the downstream side of the evaporator 6 tends to flow back because of a built up pressure difference. Such backflow is, however, blocked by the now closed check valve 7. The evaporator 6 thus can be emptied to a substantially harmless degree. Even if later the evaporator 6 or pipes should be damaged, no refrigerant will leak out into the vehicle compartment.

The compressor 1 is driven by the engine. As long as the ignition is ON and the engine is running, the collection of the refrigerant can be performed when the operation of the automotive air conditioner is to be stopped. In a case where operation of the automotive air conditioner is stopped when the ignition key is turned in the off position, the engine nevertheless needs to be kept operating for the predetermined time after the key is turned, to control the compressor 1 to collect sufficient refrigerant from the evaporator when terminating the operation of the air conditioner.

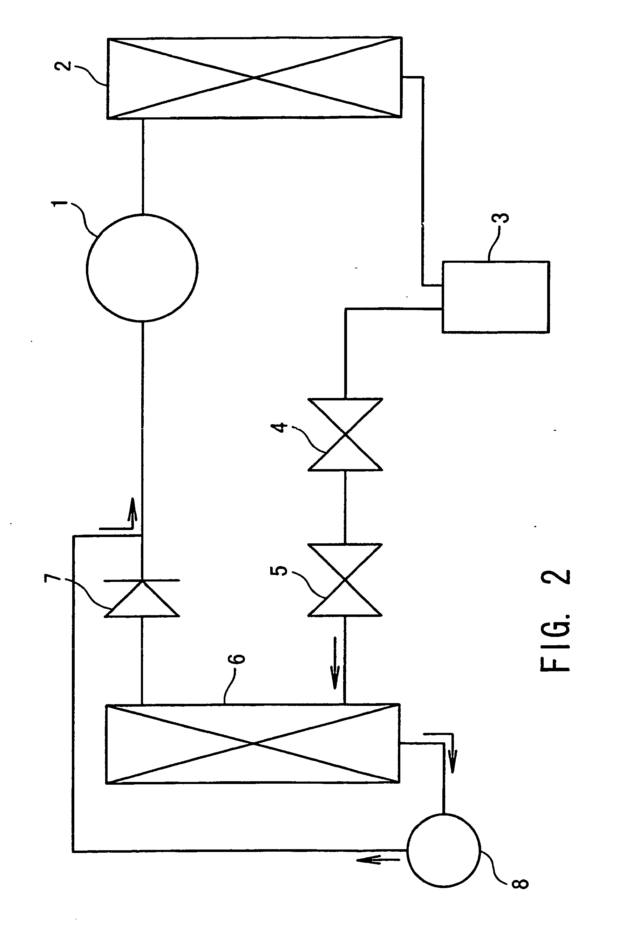

In the refrigeration system of Fig. 2, an electric motor-driven liquid pump 8 is arranged in a passage between the bottom of the evaporator 6 and the downstream side of the check valve 7. While passing through the evaporator 6, the refrigerant does not always evaporate in its entirety. Some liquid refrigerant may remain in the bottom portion of the evaporator 6. The liquid pump 8 is used to collect liquid refrigerant from the evaporator 6.

When the operation of the automotive air conditioner is to be stopped, the solenoid valve 5 is closed to shut off the refrigerant passage between the expansion valve 4 and the evaporator 6. The liquid pump 8 is operated. The compressor 1 is kept operating as well. Gaseous refrigerant is sucked out by the compressor 1 from the evaporator 6 while at the same time, remaining liquid refrigerant is sucked out from the evaporator 6 by the liquid pump 8. After remaining liquid refrigerant has been sucked out, the liquid pump 8 runs idle such that its load decreases. The driving current for the liquid pump 8, for example, is monitored. When the driving current decreases, it is judged that collection of the liquid refrigerant is complete. Then the liquid pump 8 may be stopped. The operation of the compressor 1 continues to collect the gaseous refrigerant. After a predetermined time has elapsed, long enough to at least substantially empty the evaporator 6, also operation of the compressor 1, i.e. the engine driving the compressor 1, is stopped.

When operation of the automotive air conditioner stops when the ignition key is turned, the liquid pump 8 alone may be started at the same time and may be driven until the collection of liquid refrigerant from the evaporator 6 is completed.

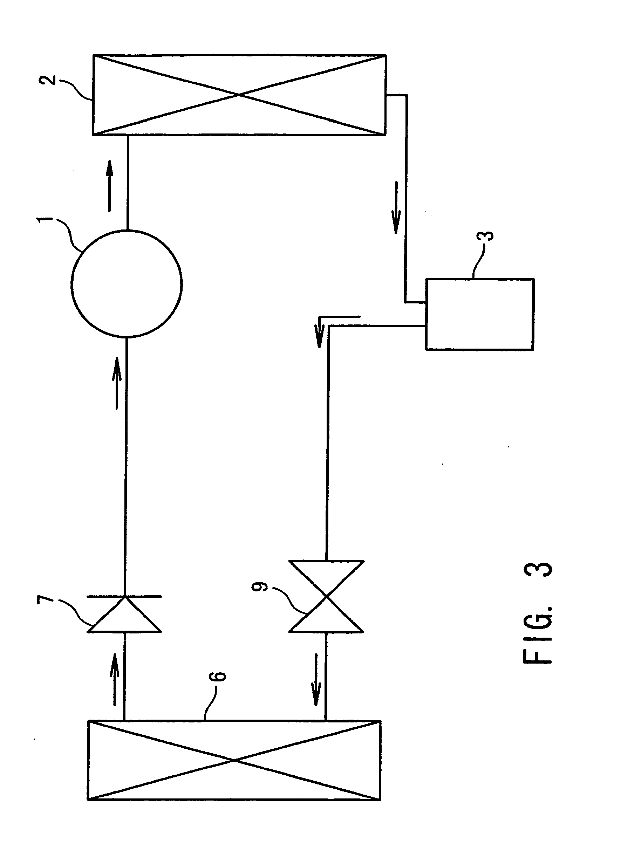

In the refrigeration system of Fig. 3, a solenoid valve-equipped expansion valve 9 (the expansion valve 4 and the solenoid valve 5 are integrated into a unit) is arranged between the receiver 3 and the evaporator 6. The expansion valve 9, of which the valve element is fully closed in de-energized condition, has a perfectly sealed construction such that its valve section is free from internal leakage as long as the valve element is fully closed. The valve has a function similar to that of the above-mentioned solenoid valve 5. In energized condition of the expansion valve 9, its valve lift is controlled in accordance with the value of a supplied electric current, so that the valve 9 functions as the above-mentioned expansion valve 4.

The refrigeration system then only will need the check valve 7 in addition The liquid pump 8 of Fig. 2 may be used in combination in Fig. 3 as well.

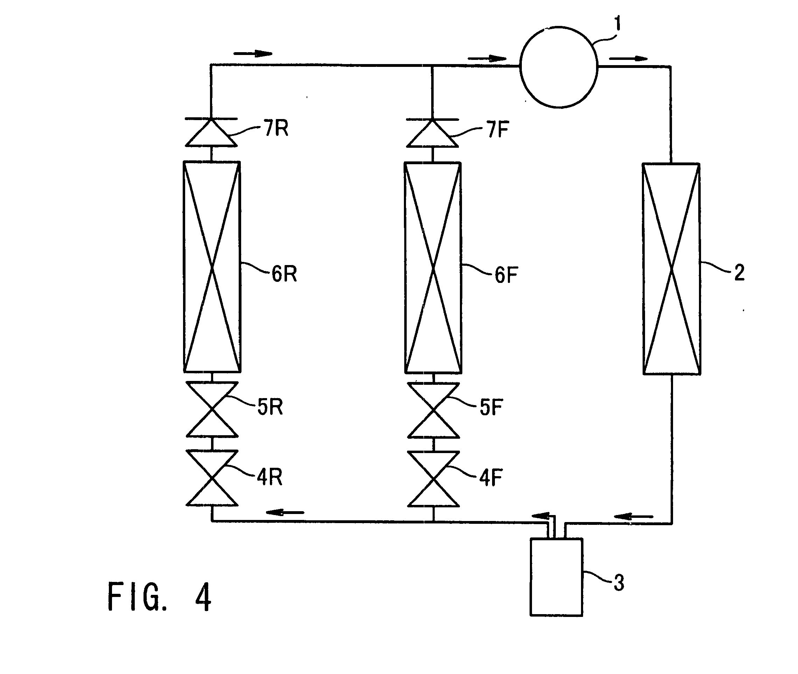

The refrigeration system of Fig. 4 is for a so-called dual air conditioner allowing to control temperatures of the front-seat and the rear-seat sides of the vehicle compartment.

The refrigeration system comprises, in addition to the compressor 1, condenser 2 and receiver 3, a circuit for the front-seat side which includes an expansion valve 4F, a solenoid valve 5F, an evaporator 6F and a check valve 7F, and a circuit for the rear-seat side which includes an expansion valve 4R, a solenoid valve 5R, an evaporator 6R and a check valve 7R. The rear-side circuit generally is provided with the solenoid valve 5R already in order to selectively block the refrigerant flow to the rear-side circuit when air conditioning of the rear-seat side is stopped. Compared with conventional systems, therefore, this refrigeration system is additionally only equipped with the front-side solenoid valve 5F and check valve 7F and the rear-side check valve 7R.

When only the front-seat side is air-conditioned, the solenoid valve 5F of the front-side circuit is kept fully open. The solenoid valve 5R of the rear-side circuit is kept fully closed. In the rear-side circuit the refrigerant is blocked to flow into the evaporator 6R. The check valve 7R prevents the refrigerant exiting the evaporator 6F from flowing back into the evaporator 6R but permits to collect the refrigerant from the evaporator 6R. Almost all refrigerant from the evaporator 6R is collected and circulates through the front-side circuit, such that the front-side circuit never comes short of refrigerant. A lowered cooling power due to a shortage of refrigerant does not occur.

When the operation of the entire automotive air conditioner is to be stopped, first, the solenoid valves 5F and 5R are closed to shut off the refrigerant passage between the expansion valve 4F and the evaporator 6F and the refrigerant passage between the expansion valve 4R and the evaporator 6R, respectively. No further refrigerant delivered under pressure from the compressor 1 is allowed to flow into the evaporators 6F and 6R. The compressor 1 is kept operating for a predetermined time after the solenoid valves 5F and 5R are closed, to collect the refrigerant from the evaporators 6F and 6R. After the predetermined time has elapsed for the continued compressor operation by which the evaporators 6F and 6R become empty, the operation of the compressor 1 is stopped. The liquid pump 8 shown in FIG. 2 may be used in combination.

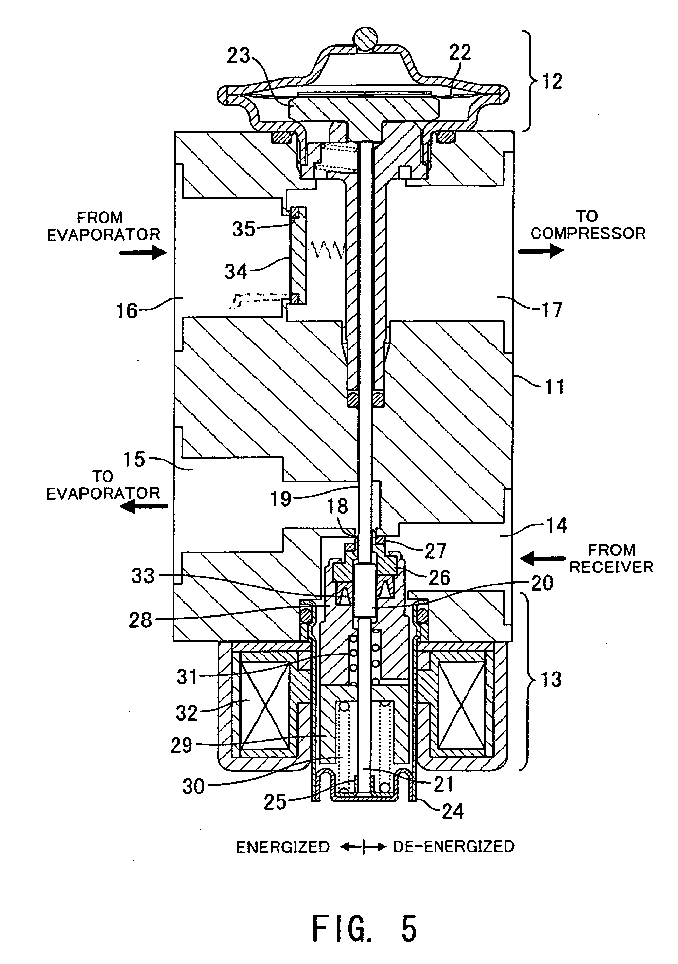

Into the integrated valve of Fig. 5 an expansion valve, a solenoid valve and a check valve are integrated as a unit. The right half of Fig. 5 shows a valve closed state with the solenoid 13 de-energized. The left half of Fig. 5 shows a state in which the integrated valve functions as the expansion valve with the solenoid 13 energized.

The integrated valve comprises a body block 11 for accommodating respective valve sections, a power element 12 for sensing the temperature and pressure of the refrigerant returned from the evaporator 6, and the solenoid 13 for switching between the solenoid valve function and the expansion valve function.

The body block 11 has a lateral port 14 for receiving high-temperature, high-pressure liquid refrigerant from the receiver 3, a port 15 from which low-temperature, low-pressure refrigerant adiabatically expanded in the integrated valve is supplied to the evaporator 6, a port 16 for receiving the refrigerant returned from the evaporator 6, and a port 17 from which the refrigerant received from the port 16 is supplied to the compressor 1.

A valve seat 18 is formed in a fluid passage connecting the ports 14, 15 as an integral part of the body block 11. A shaft 19 penetrates a valve hole of the valve seat 18. A valve element guide 20 and a coaxial shaft 21 extend in the longitudinal axial direction of the integrated valve. The shaft 19 is slidably supported in a bore of the body block 11 and has an upper end abutting a center disk 23 on the lower surface of a diaphragm 22 of the power element 12. The shaft 21 also is axially slidably supported at its lower end by a bearing 25 formed in an iron core case 24 of the solenoid 13. The valve element guide 20 has both end faces abutting against the lower end of the shaft 19 and the upper end of the shaft 21, respectively.

A common valve element 26, which is shared by the solenoid valve and the expansion valve, is arranged on an upstream side of the valve seat 18. The valve element 26 is movable in contact with and away from the valve seat 18, while it is guided by the shaft 19 and the valve element guide 20. A flexible annular valve sheet 27 is attached to a seat portion of the valve element 26. A gap between the valve seat 18 and the valve element 26 constitutes a variable orifice for constricting the flow of the high-pressure refrigerant, and when passing through the variable orifice, the refrigerant adiabatically expands (left part of Fig. 5). The solenoid valve function is exercised when the solenoid 13 is de-energized. Then the valve element 26 closes the valve seat 18 such that the valve sheet 27 perfectly seals the valve seat 18. Any flow of the refrigerant is stopped.

The valve element 26 is held by a first movable iron core 28 of the solenoid 13. The first iron core 28 is axially movable and guided by the valve element guide 20 and the shaft 21. Below the first iron core 28 is arranged a second iron core 29 secured to the shaft 21. The second iron core 29 acts as a fixed iron core of the solenoid 13 and is urged upward by a spring 30 such that the shaft 19 is pushed by the valve element guide 20 and abuts against the center disk 23. A spring 31 is disposed between the first and second iron cores 28 and 29. While the solenoid 13 is de-energized (right part of Fig. 5), the first iron core 28 is moved away from the second iron core 29 by the spring 31. The valve sheet 27 is brought into urging contact with the valve seat 18 (fully closed state). An electromagnetic coil 32 is arranged around a case 24. When energized, the coil 32 causes the first and second iron cores 28 and 29 to be attracted in contact with each other (left part of Fig. 5). Then the valve element 26 and the shaft 21 will be electromagnetically coupled. Any displacements of the diaphragm 22 of the power element 12 will be transmitted to the valve element 26.

To prevent internal leakage, or more specifically, to prevent leakage through the gap between the valve element 26 and the valve element guide 20 to the downstream side of the valve section while the valve element 26 closes the valve seat 18, a V-packing 33 is fitted in a space defined below the valve element 26 in the first iron core 28.

A check valve 34 is arranged in a refrigerant passage between the port 16 for receiving the refrigerant from the evaporator 6 and the port 17 for returning the refrigerant to the compressor 1. In the illustrated example, the check valve 34 is located as a plate or disk on the outlet side of a seat in a refrigerant passage through which the refrigerant flows from the port 16 to a space communicating with a lower chamber beneath the diaphragm 22 to allow the power element 12 to sense the temperature and pressure of the refrigerant. Although not shown in full detail, the check valve 34 has integral legs guided in opening and closing directions along the inner wall of the refrigerant passage. The check valve 34 and is urged in the valve closing direction by a weak spring. A flexible annular valve sheet 35 is attached to a seating portion of the check valve 34.

While the solenoid 13 is de-energized to perform the solenoid valve function the valve element 26 fully closes the valve seat 18. The check valve 34 allows refrigerant to be sucked out of the evaporator 6 by the compressor 1. After the compressor 1 is stopped, the check valve 34 prevents refrigerant from flowing back into the evaporator 6 from the compressor 1.

When the automotive air conditioner is used, the solenoid 13 (left part of Fig. 5) is energized. By the attracted first and second iron cores 28 and 29 the valve element 26 is indirectly fixed to the shaft 21. As the first iron core 28 moves toward the second iron core 29, the valve element 26 leaves the valve seat 18. High-temperature, high-pressure refrigerant supplied to port 14 from the receiver 3 flows to port 15 through the gap between the valve element 26 and the valve seat 18 and adiabatically expands and turns into low-temperature, low-pressure refrigerant, which is then supplied from the port 15 to the evaporator 6.

In the evaporator 6, the refrigerant will evaporate by exchanging heat with the air in the vehicle compartment. Evaporated refrigerant is returned to the integrated valve at port 16, passes through the check valve 34 and is returned to the compressor 1 through port 17. The temperature and pressure of the refrigerant from the evaporator 6 are sensed by the diaphragm 22 of the power element 12. Any displacement of the diaphragm 22 corresponding to temperature and pressure of the refrigerant is transmitted by shaft 19, valve element guide 20, shaft 21, and first and second iron cores 28 and 29 to the valve element 26 which in turn controls the flow rate of the refrigerant.

When the automotive air conditioner is to be stopped, first, the solenoid 13 is de-energized. The first iron core 28 is urged by the spring 31 in a direction away from the second iron core 29. The valve element 26 is seated on the valve seat 18 with the valve sheet 27. The solenoid valve function shuts off the internal refrigerant passage. No more refrigerant will flow into the evaporator 6. The compressor 1 is kept operating for a predetermined time after the solenoid 13 is de-energized, to suck refrigerant out of the evaporator 6. When the evaporator 6 is emptied, the compressor is stopped. The refrigerant sucked out of the evaporator 6 is prevented from flowing back into the evaporator 6 by the check valve 34, so that the evaporator 6 will remain empty.

## Claims

1. A refrigeration system including an evaporator (6) arranged in a vehicle compartment, a compressor (1) and an expansion valve (4) **characterized by**:
a solenoid valve (5) arranged at an inlet of the evaporator (6) and capable of shutting off a refrigerant passage between the expansion valve (4) and the evaporator (6) when operation of the system is to be stopped and during stoppage of the operation; and
a check valve (7) arranged at an outlet of the evaporator (6), for preventing that refrigerant sucked out by the compressor (1) when the operation of the system is to be stopped, flows back into the evaporator (6) during stoppage of the operation.

2. The refrigeration system according to claim 1, **characterized by** a liquid pump (8) arranged in a passage connecting between a bottom portion of the evaporator (6) and a downstream side of the check valve (7), the liquid pump (8) being capable of collecting liquid stored refrigerant from the evaporator (6).

3. A method for operating a refrigeration system according to claim 1 used in an automotive air conditioner, the operation of which selectively can be stopped
**characterized in that** when operation of the automotive air conditioner is to be stopped, remaining refrigerant in an evaporator (6) is collected by shutting off a refrigerant passage on an inlet side of the evaporator (6) by a solenoid valve (5) and by operating a compressor (1) for a predetermined time to suck out refrigerant from the evaporator (6) through a check valve (7) before the operation is stopped.

4. The method according to claim 3, **characterized in that** it is deferred, in response to a turn-off operation of an ignition key, the engine stop for a predetermined time to operate the compressor (1) via the engine for the predetermined time, to thereby suck out refrigerant from the evaporator (6) through the check valve (7).

5. The method according to claim 3 or 4, **characterized in that** liquid refrigerant stored in a bottom portion of the evaporator (6) is collected by an electric motor-driven liquid pump (8) in response to a stop of the operation of the automotive air conditioner, and that the liquid pump (8) is stopped by responding to a pump load decrease.

## Patentansprüche

1. Kühlsystem, mit einem in einem Fahrzeugraum angeordneten Verdampfer (6), einem Kompressor (1) und einem Expansionsventil (4), **gekennzeichnet durch**
ein an einem Einlass des Verdampfers (6) angeordnetes Magnetventil (5), das bei Stoppen des Betriebs des Kühlsystems anzuhalten ist und während eines Betriebsstopps zum Absperren einer Kältemittelpassage zwischen dem Expansionsventil (4) und dem Verdampfer (6) betätigbar ist,; und
ein an einem Auslass des Verdampfers (6) angeordnetes Rückschlagventil (7), das verhindert, dass dann wenn der Betrieb des Kühlsystems zu stoppen ist, **durch** den Kompressor (1) herausgesaugtes Kältemittel, während des Betriebsstopps in den Verdampfer zurück strömt.

2. Kühlsystem gemäß Anspruch 1, **gekennzeichnet durch** eine Flüssigkeitspumpe (8), in einer Passage, die eine Verbindung zwischen einem Bodenbereich des Verdampfers (6) und einer Stromabseite des Rückschlagventils (7) herstellt, wobei die Flüssigkeitspumpe (8) in der Lage ist, flüssiges gespeichertes Kältemittel aus dem Verdampfer (6) zu sammeln.

3. Verfahren zum Betreiben eines Kühlsystems gemäß Anspruch (1), das in einer Automobil-Klimaanlage verwendet wird, und dessen Betrieb wahlweise gestoppt werden kann,
**dadurch gekennzeichnet, dass** dann, wenn der Betrieb der Automobil-Klimaanlage zu stoppen ist, in einem Verdampfer (6) verbleibendes Kältemittel durch Absperren einer Kältemittelpassage an einer Einlassseite des Verdampfers (6) mittels eines Magnetventils (5) und durch Betreiben eines Kompressors (1) über eine vorbestimmte Zeit gesammelt wird, der durch ein Rückschlagventil (7) Kältemittel aus dem Verdampfer (6) absaugt, ehe der Betrieb gestoppt wird.

4. Verfahren gemäß Anspruch 3, **dadurch gekennzeichnet, dass** unter Ansprechen auf eine Ausschaltoperation eines Zündschlüssels die Motorabstellung für eine vorbestimmte Zeit ausgesetzt wird, um den Kompressor (1) über den Motor über die vorbestimmte Zeit zu betreiben und **dadurch** aus dem Verdampfer (6) durch das Rückschlagventil (7) Kältemittel herauszusaugen.

5. Verfahren gemäß Anspruch 3 oder 4, **dadurch gekennzeichnet, dass** in einem Bodenbereich des Verdampfers (6) gespeichertes, flüssiges Kältemittel durch eine von einem Elektromotor getriebene Flüssigkeitspumpe (8) unter Ansprechen auf das Anhalten des Betriebs der Automobil-Klimaanlage gesammelt wird, und dass die Flüssigkeitspumpe (8) bei Ansprechen auf eine Pumpenlastabnahme angehalten wird.

## Revendications

1. Système de réfrigération incluant un évaporateur (6) agencé dans un compartiment de véhicule, un compresseur (1) et un détendeur (4), **caractérisé par** :
une électrovanne (5) agencée à une entrée de l'évaporateur (6) et capable de fermer un passage de réfrigérant entre le détendeur (4) et l'évaporateur (6) lorsque le fonctionnement du système doit être arrêté et pendant un arrêt du fonctionnement, et
un clapet antiretour (7) agencé à une sortie de l'évaporateur (6), pour empêcher ce réfrigérant aspiré à l'extérieur par le compresseur (1) lorsque le fonctionnement du système doit être arrêté, de s'écouler en arrière dans l'évaporateur (6) pendant l'arrêt du fonctionnement.

2. Système de réfrigération selon la revendication 1, **caractérisé par** une pompe à liquide (8) agencée dans un passage reliant une partie inférieure de l'évaporateur (6) et un côté en aval du clapet antiretour (7), la pompe à liquide (8) étant capable de recueillir un réfrigérant stocké dans un liquide à partir de l'évaporateur.

3. Procédé pour faire fonctionner un système de réfrigération selon la revendication 1 utilisé dans un dispositif de climatisation automobile, dont le fonctionnement peut être arrêté de manière sélective,
**caractérisé en ce que** lorsque le fonctionnement du dispositif de climatisation automobile doit être arrêté, le réfrigérant restant dans un évaporateur (6) est recueilli en fermant un passage de réfrigérant sur un côté d'entrée de l'évaporateur (6) par une électrovanne (5), et en actionnant un compresseur (1) pendant un temps prédéterminé pour aspirer le réfrigérant à l'extérieur à partir de l'évaporateur (6) à travers un clapet antiretour (7) avant que le fonctionnement ne soit arrêté.

4. Procédé selon la revendication 3, **caractérisé en ce que**, en réponse à une opération de coupure d'une clé de contact, le moteur s'arrête pendant un temps prédéterminé pour faire fonctionner le compresseur (1) par l'intermédiaire du moteur pendant le temps prédéterminé, pour ainsi aspirer le réfrigérant à l'extérieur à partir de l'évaporateur (6) à travers le clapet antiretour (7).

5. Procédé selon la revendication 3 ou 4, **caractérisé en ce qu'**un réfrigérant liquide stocké dans une partie inférieure de l'évaporateur (6) est recueilli par une pompe à liquide entraînée par moteur électrique (8) en réponse à un arrêt du fonctionnement du dispositif de climatisation automobile, et **en ce que** la pompe à liquide (8) est stoppée en réponse à une diminution de charge de pompe.
